Europäisches Patentamt

European Patent Office

Office européen des brevets

(11) Veröffentlichungsnummer: **0 010 654**
**A1**

## (12) EUROPÄISCHE PATENTANMELDUNG

(21) Anmeldenummer: 79103878.9

(22) Anmeldetag: 10.10.79

(51) Int. Cl.³: **H 02 K 15/02,** H 02 K 15/12,
C 08 L 63/02, C 09 J 5/02,
H 01 F 41/02

(30) Priorität: 04.11.78 DE 2847988

(43) Veröffentlichungstag der Anmeldung: 14.05.80
Patentblatt 80/10

(84) Benannte Vertragsstaaten: BE IT NL SE

(71) Anmelder: BROWN, BOVERI & CIE Aktiengesellschaft
Mannheim, Kallstadter Strasse 1, D-6800 Mannheim
Käfertal (DE)

(72) Erfinder: Hopp, Werner, Domitianstrasse 12, D-6802
Ladenburg (DE)
Erfinder: Klee, Peter, Lindestrasse 28, D-6944
Hemsbach (DE)

(74) Vertreter: Kempe, Wolfgang Dr. et al, c/o Brown,
Boveri & Cie AG Patentabteilung Postfach 351, D-6800
Mannheim 1 (DE)

(54) Verfahren zum Verkleben von Blechpaketen im Elektromaschinen- und Transformatorenbau.

(57) Blechpakete werden gepreßt, auf 120° bis 130°C erwärmt und anschließend mit einem kalt anhärtenden Epoxydharz von Raumtemperatur übergossen. Dabei verflüssigt sich das Epoxydharz und dringt in feinste Spalten und Ritzen zwischen den Blechen ein. Nach dem Aushärten des Harzes kann das Blechpaket aus der Preßvorrichtung genommen werden. Anwendung im Elektromaschinen- und Transformatorenbau.

EP 0 010 654 A1

B R O W N , B O V E R I & C I E AKTIENGESELLSCHAFT

Mannheim                         2. Nov. 1978

Mp.-Nr. 663/78                   ZFE/P2-Bi/Bt

Verfahren zum Verkleben von Blechpaketen im Elektro-
maschinen- und Transformatorenbau.

Die Erfindung betrifft ein Verfahren zum Verkleben von
Blechpaketen im Elektromaschinen- und Transformatorenbau,
bei dem das Blechpaket mit Epoxidharz übergossen und bis
zum Aushärten des Harzes gepreßt wird.

Aus der DE-OS 24 46 693 ist ein Verfahren zum Herstellen
von elektromagnetischen Bauteilen mit lamelliertem Eisenkern bekannt, bei dem Bleche verwendet werden, die mit
einem aushärtbaren Klebharz beschichtet sind, das bei einer
erhöhten, aber unter der Aushärtetemperatur liegenden Zwischentemperatur wie ein Schmelzklebstoff erweicht, bei Abkühlung wieder erstarrt. Die mit dem vorgehärteten Harz
beschichteten Bleche werden geschichtet und mit einem aushärtbaren Tränkharz getränkt. Anschließend werden die Bauteile einer Wärmebehandlung unterworfen, bei der das Klebharz und das Tränkharz bei Aushärtetemperatur ausgehärtet
werden. Es ist leicht einzusehen, daß dieses Verfahren teuer ist, da zwei verschiedene Harze verwendet und die
Bleche mehrmals erwärmt werden müssen. Durch die Verwendung von vorbeschichteten Blechen ergeben sich relativ
große gegenseitige Abstände der Bleche und damit ein
geringer Eisenfüllfaktor.

Aus der CH-PS 483 707 ist eine Dreiphasen-Drosselspule
mit Magnetkern bekannt, der aus drei Säulen besteht.
Jede Säule wiederum ist aus einer Mehrzahl von radial
geblechten Säulenstummeln zusammengesetzt. Die einen
Säulenstummel bildenden Magnetbleche können miteinander
verklebt sein. Als Klebemittel wird ein selbsthärtendes
Polyester- oder Epoxidharz angegeben. Um die nötige mechanische Festigkeit zu erreichen und um den Säulenstummeln
an ihren Stirnflächen einen glatten, ebenen Abschluß zu
verleihen, können sie zusätzlich bandagiert und die
Bandagen verklebt sein sowie an den Stirnflächen eine
aufgeklebte Isolierschicht tragen. Das Aufbringen der
Klebeschicht erfolgt entweder durch Übergießen der gepreßten Bleche mit Kunstharz oder durch Tränken in Kunstharz. Bei diesen bekannten Verfahren läßt sich ein höherer
Eisenfüllfaktor erreichen, da das Blechpaket beim Pressen
noch keine Kunstharzzwischenschichten zwischen den einzelnen Blechen besitzt. Es hat sich jedoch gezeigt, daß
bei dem dort verwendeten nachträglichen Verkleben nur
relativ wenig Kunstharz zwischen die einzelnen Bleche
eindringt. Das meiste Harz verbleibt an der Außenseite.
Aus diesem Grunde ist die Festigkeit des so verklebten
Blechpakets noch steigerbar.

Es ist auch schon bekannt, die Blechpakete mit einem
heißhärtenden Gießharz zu imprägnieren und zum Aushärten
in heizbare Preßformen einzulegen. Es ist jedoch leicht
einzusehen, daß derartige Preßformen teuer sind und daß
ihre Form der Form der zu verklebenden Gegenstände angepaßt sein muß.

Der vorliegenden Erfindung liegt die Aufgabe zugrunde, das eingangs beschriebene Verfahren dahingehend zu verbessern, daß das Eindringen des Epoxidharzes in die Zwischenräume zwischen den einzelnen Blechen verbessert wird, ohne daß aufwendige heizbare Preßvorrichtungen verwendet werden müssen.

Diese Aufgabe wird dadurch gelöst, daß zuerst das Blechpaket auf 120° bis 130°C erwärmt und dann mit einem kalt anhärtenden Epoxidharz von Raumtemperatur übergossen wird.

Bei dem erfindungsgemäßen Verfahren werden die Blechpakete also zunächst im kalten Zustand geschichtet, gegeneinander gepreßt und beispielsweise mit einem Spannband verspannt. Das so entstandene Blechpaket wird in einem beliebigen Ofen auf die genannte Temperatur erwärmt und dann außerhalb des Ofens mit dem genannten Epoxidharz übergossen. Das Gießharz verdünnt sich beim Auftreffen auf das heiße Blech so sehr, daß es in die mikrofeinen Zwischenräume zwischen den Blechen eindringt und die Bleche miteinander verklebt. Die in dem Blechpaket gespeicherte Wärme reicht aus, um das Harz in wenigen Minuten soweit zu härten, daß das Blechpaket weiter behandelt werden kann.

Durch das Ausfüllen der Zwischenräume und die hervorragende Klebewirkung des verwendeten kalt anhärtenden Epoxidharzes entsteht ein Eisenkern, der statisch und dynamisch außergewöhnlich hoch belastet werden kann, der ein besonders günstiges Schwingungsverhalten hat, der weniger Geräusche entwickelt, der keine zusätzliche Bandagierung benötigt und dessen elektromagnetische Verluste durch den Wegfall der Schwingungen in den Einzelblechen verringert sind. Obwohl das erfindungsgemäße Verfahren unter den normalen Umgebungsbedingungen durchgeführt wird, sind die Ergebnisse ebensogut wie bei einem Verguß des Harzes im Vakuum.

Unter einem kalt anhärtenden Epoxidharz, wie es beim der erfindungsgemäßen Verfahren eingesetzt wird, versteht man ein Harz-Härter-System, welches im kalten Zustand nur bis zu einem gewissen Grad härtet und zur endgültigen Härtung eine zusätzliche Aktivierungsenergie in Form von Wärme benötigt. Dabei hat sich herausgestellt, daß jedes derart reagierende Epoxidharz zur Durchführung des erfindungsgemäßen Verfahrens geeignet ist; es muß nur bei der Verarbeitungstemperatur eine so niedrige Viskosität besitzen, daß es auch ohne Vakuum in die feine Spalte zwischen den Blechen eindringen und die gute Haftung bewirken kann.

Ein geeignetes Harz-Härter-System ist Bisphenol A, gemischt mit einem flüssigen Anhydrithärter oder einem aromatischen Aminhärter. Bisphenol A wird unter der Bezeichnung "Araldit F", ein aromatischer Aminhärter unter der Bezeichnung "HY 845" und ein geeigneter Anhydrithärter unter der Bezeichnung "HT 901" verkauft von der Fa. Ciba-Geigy, Basel, Schweiz.

<u>A n s p r ü c h e</u>

1. Verfahren zum Verkleben von Blechpaketen im Elektromaschinen- und Transformatorenbau, bei dem das Blechpaket mit Epoxidharz übergossen und bis zum Aushärten des Harzes gepreßt wird, <u>dadurch gekennzeichnet,</u> daß zuerst das Blechpaket auf 120° bis 130° C erwärmt und dann mit einem kalt anhärtenden Epoxidharz von Raumtemperatur übergossen wird.

2. Verfahren nach Anspruch, dadurch gekennzeichnet, daß ein Oxidharz vom Typ Bisphenol A verwendet wird.

3. Verfahren nach Anspruch 1 oder 2, dadurch gekennzeichnet, daß ein aromatischer Aminhärter verwendet wird.

4. Verfahren nach Anspruch 1 oder 2, dadurch gekennzeichnet, daß ein flüssiger Anhydrithärter verwendet wird.

Europäisches
Patentamt

**EUROPÄISCHER RECHERCHENBERICHT**

0010654

Nummer der Anmeldung

EP 79 103 878.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>GB - A - 1 326 766</u> (GENERAL ELECTRIC COMPANY)<br>* Seite 3, Zeile 33 und folgende *<br>-- | 1,2 |
| | <u>US - A - 3 513 527</u> (C.D. HOY)<br>* Spalte 3, Zeile 57 bis Spalte 4, Zeile 29 *<br>-- | 1,2 |
| | A.M. PAQUIN "Epoxydverbindungen und Epoxydharze"<br>1958, SPRINGER-VERLAG, Berlin, Göttingen, Heidelberg<br>Seiten 461 bis 485<br>* Seiten 461, 462, 469, 473, 479 *<br>-- | 3,4 |
| A | <u>DE - C - 1 213 937</u> (MASCHINENFABRIK OERLIKON)<br>* Ansprüche 1, 2 und 4 *<br>---- | |

**KLASSIFIKATION DER ANMELDUNG (Int.Cl.)**

H 02 K 15/02
H 02 K 15/12
C 08 L 63/02
C 09 J 5/02
H 01 F 41/02

**RECHERCHIERTE SACHGEBIETE (Int. Cl.)**

H 01 F 41/00
H 02 K 1/00
H 02 K 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Berlin | 05-02-1980 | GESSNER |

EPA form 1503.1 06.78